# EUROPEAN PATENT APPLICATION

(11) **EP 1 484 865 A2**
(43) Date of publication of application: **08.12.2004**
(21) Application number: 04101942.3
(22) Date of filing: 05.05.2004
(51) Int. Cl.: H04L 12/28, H04L 29/06

(54) **Data transfer via a wireless network**

(30) Priority: 03.06.2003 KR 2003035776
(71) Applicant: Samsung Electronics Co., Ltd., 442-742 Gyeonggi-do (KR)
(72) Inventor: An, Cheolhong, Yeongtong-dong, Suwon-si, Gyeonggi-do (KR)
(74) Representative: Read, Matthew Charles

(57) **Abstract**

A method for transferring data between a host device and a peripheral device using a serial communication protocol, such as the Universal Serial Bus (USB) protocol, comprises carrying serial communication protocol signals between the host and the peripheral device via a wireless network. The wireless network may be a Piconet. The host device comprises a device discovery module (340), a device list storage module (330), and an endpoint bandwidth allocation module (350). The device discovery module (340) detects devices connected to the PAN. The endpoint bandwidth allocation module allocates bandwidth to an endpoint according to the type of data transfer to be performed by a device. Information regarding the type of transfer performed by a given device may be stored and retrieved by the device list storage module (330).

## Description

The present invention relates to a method of transferring data between a host device and a peripheral device using a serial communication protocol.

Digital products are becoming more popular and it is now possible to connect many digital products, such as Digital Versatile Disc (DVD) players, cable Set Top Boxes (STBs), Digital Video Cassette Recorders (DVCRs), Digital Televisions (DTVs) and Personal Computers (PCs), to a single network. In particular, many Universal Serial Bus (USB) devices may be connected to a USB host using wired connections. With the development of wireless technology, attempts have been made to connect these devices to each other in a wireless manner.

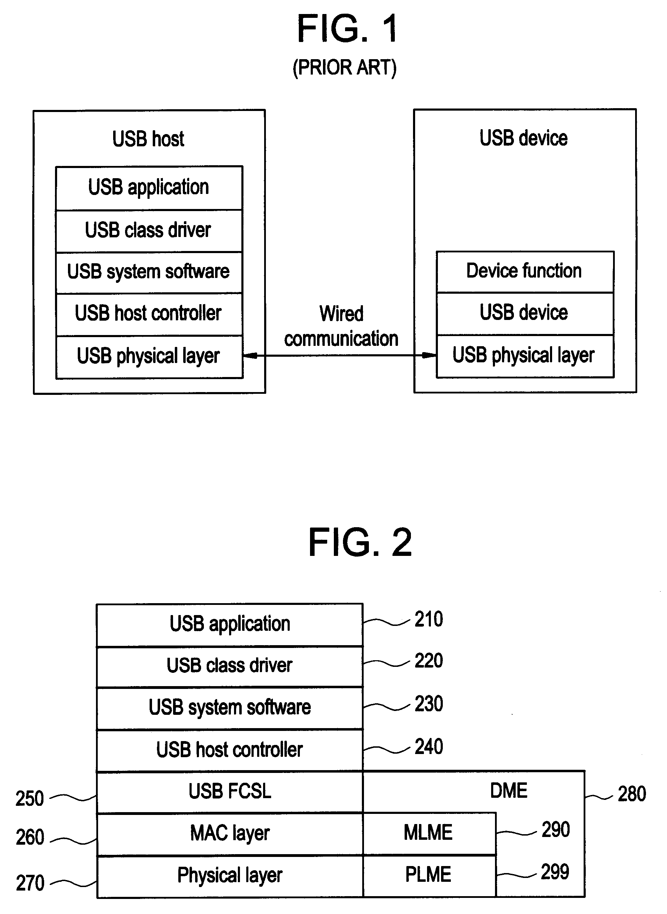

A conventional arrangement is depicted in Figure 1. When a USB device is connected to a port of a USB host, the USB host detects the connection of the USB device using a root hub function included in the Physical Layer (PHY) of the USB protocol stack. The USB host automatically selects and loads a USB class driver corresponding to the newly connected USB device. As a result, a USB application establishes a channel for communicating with the USB device function. In a lower layer, four types of data transfer can be performed:
- Control transfer;
   This type of transfer is performed in bursts. It is non-periodic and based on host software-initiated request/response communications. This method is used to transmit commands and status queries.
- Isochronous transfer;
   This type of transfer is periodic and performed continuously between a host and a device. Isochronous transfer methods are used where data is to be transferred at approximately the same rate as an original data flow, for example, in a video stream. This transfer method is distinguished from asynchronous transfer methods, which are suitable for processes that continue independently until a dependent process discontinues other processes, and synchronous transfer methods in which a process must wait for termination or an event associated with another process before continuing a transfer.
- Interrupt transfer;
   An interrupt transfer is used where the data rate is low, and performs bounded-latency communication.
- Bulk transfer;
   Bulk transfers are non-periodic. In bulk transfer methods, a predetermined bandwidth is utilised, when available. If the predetermined bandwidth is unavailable, data transfer is delayed.

Through these transfers, the USB application can control the USB device by transferring commands to the USB device function.

According to one aspect of the present invention, a method of transferring data between a host device and a peripheral device is characterised by carrying serial communication protocol signals between the host and the peripheral device via a wireless network.

The method may further comprise detecting a presence of the peripheral device on the wireless network, ascertaining a type of data transfer associated with an endpoint of the peripheral device and allocating a channel time to the device according to a type of data transfer to be performed by said device.

Said serial communication protocol may be a Universal Serial Bus (USB) protocol. The method may then allow data transfers of the types currently supported by wired USB connections to be performed over a wireless network.

The method may comprise assigning channel time according to the type of transfer to be performed.

This aspect of the invention further provides a computer programmed to perform such a method, a signal representing a computer program for programming a computer to provide such a computer and a data carrier having the signal recorded therein or thereon. It will be understood that the term "recorded" used in respect of the data carrier is not limited to direct recordings and includes within its scope copying of a signal onto the data carrier by stamping etc.

This aspect also provides a host apparatus arranged to control transfer of data to and/or from a peripheral device using a serial communication protocol, is configured to transfer and receive serial communication protocol signals to the peripheral device via a wireless network and a wireless network system comprising such a host apparatus, a peripheral device for communicating with the host apparatus and a wireless network. The wireless network may be a Piconet.

According to a second aspect of the invention, a network packet comprises an encapsulated data packet, wherein said data packet is configured according to a serial communication protocol. The serial communication protocol may be a Universal Serial Bus protocol.

An embodiment of the invention will now be described by way of example, with reference to the accompanying drawings, in which:
Figure 1 is a diagram of a wired USB protocol stack;
Figure 2 is a diagram of a wireless USB protocol stack;
Figure 3 is a diagram showing an architecture of a USB Frame Conversion Sublayer (FCSL) according to the present invention;
Figure 4 is a diagram showing a wireless communication process between a USB host and a USB device;
Figure 5 is a flowchart of a process for discovering a USE device;
Figure 6 is a flowchart of a process performed on a layer higher than a USB FCSL;
Figure 7 is a flowchart showing a process for allocating a channel time and transfering data;

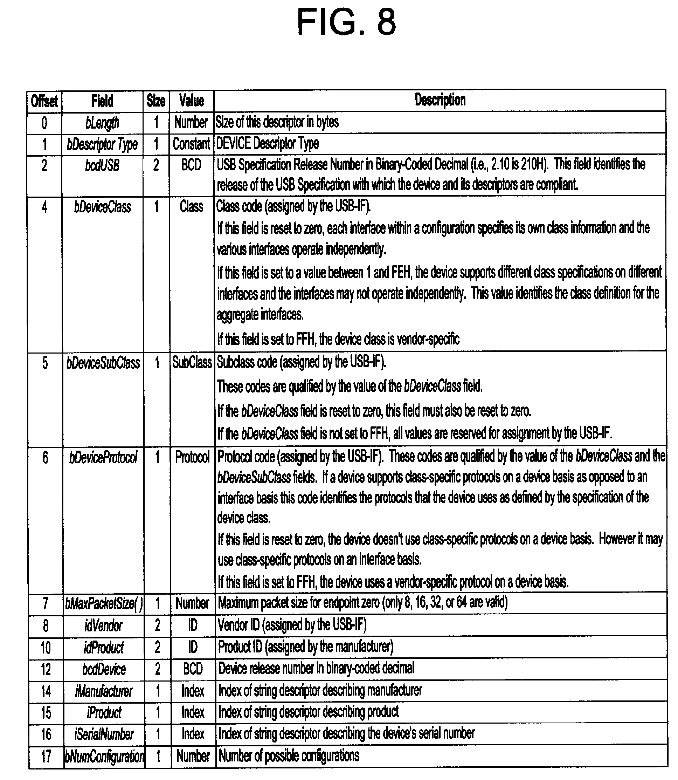

Figure 8 is a table showing USB device descriptors; and
Figure 9 is a table showing USB endpoint descriptors.

Referring to Figure 2, the architecture of the protocol stack is similar to that of the wired USB host shown in Figure 1, but differs in that a Media Access Control (MAC) layer is interposed between the USB host controller layer 240 and the physical layer 270 and a USB Frame Conversion Sub Layer (FCSL) 250 is disposed between the USB host controller layer 240 and the MAC layer 260. The provision of the MAC layer 260, which is of a type used in a basic wireless Local Area Network (LAN), and a USB FCSL 250 facilitates communication between compatible wireless devices and allows the types of data transfer supported by wired USB connections to be performed over a wireless connection.

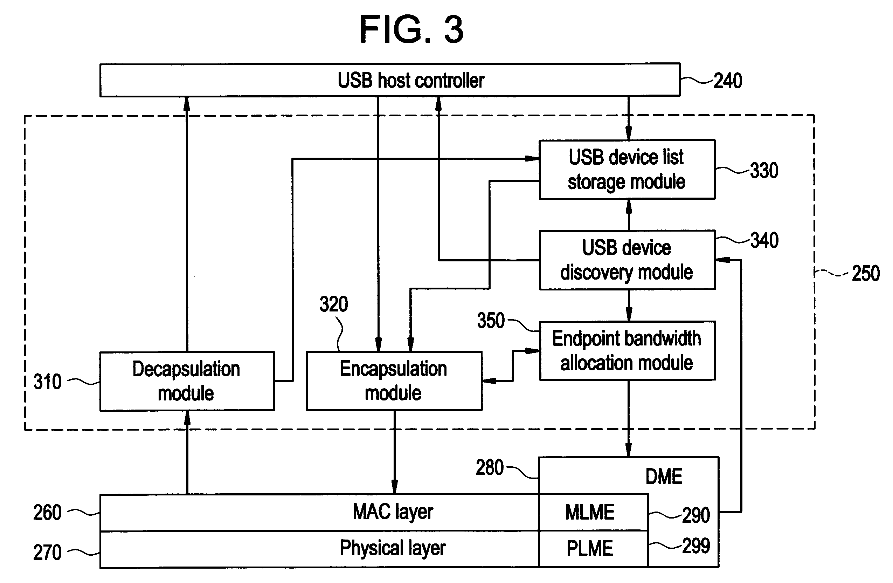

As shown in Figure 3, the USE FCSL 250 includes a USE device discovery module 340 for discovering USB devices on a Personal Area Network (PAN), such as a Bluetooth network. The USB FCSL 250 also includes an encapsulation module 320 for encapsulating USB packets in MAC packets, a decapsulation module 310 for decapsulating a received MAC packet to retrieve a USB packet and an endpoint bandwidth allocation module 350 for requesting an appropriate channel time from a Piconet Coordinator (PNC), not shown, according to the type of data transfer to be performed and allocating the channel time to a data transfer. The type of data transfer can be determined from information relating to discovered devices that is stored in a USB device list storage module 330.

The USB device discovery module 340 requests the information relating to an existing associated device or a device descriptor of a newly associated device. If a response to this request is received, the USB device discovery module 340 registers the corresponding node in a USB device list. The USB device discovery module 340 then notifies a USB host controller 240, which implements a higher layer of the protocol stack, of the presence of a new USB device. This process is referred to as a discovery process. A notification that a device is newly associated or dissociated is transmitted through the MLME-DEV-ASSOCIATION of MAC sublayer Management Entity SAP (MLME SAP).

The discovery process is performed when a connection, or association, is made. By way of contrast, where a dissociation occurs, the item corresponding to the dissociated device is removed from the USE device list and the USE host controller 240 is notified of the detachment of the device.

The encapsulation module 320 encapsulates the USB packets of each data transfer in MAC packets. In other words, the encapsulation module 320 encapsulates each packet transferred from the USB host controller 240 in a MAC packet before performing control transfer, isochronous transfer, an interrupt transfer or a bulk transfer, and transferring the MAC packet.

For isochronous transfer, the endpoint bandwidth allocation module 350 allocates isochronous channel time at either a super-rate, in the case of high bandwidth isochronous transfer, or a general rate. In the case of an interrupt transfer, isochronous channel time is allocated at a sub-rate, while in the case of control transfer, isochronous channel time for multicast or broadcast is allocated. Furthermore, in the case of a bulk transfer, asynchronous channel time is allocated.

The decapsulation module 310 is arranged to decapsulate data received from the MAC SAP and transfer the decapsulated data to the USB host controller 240.

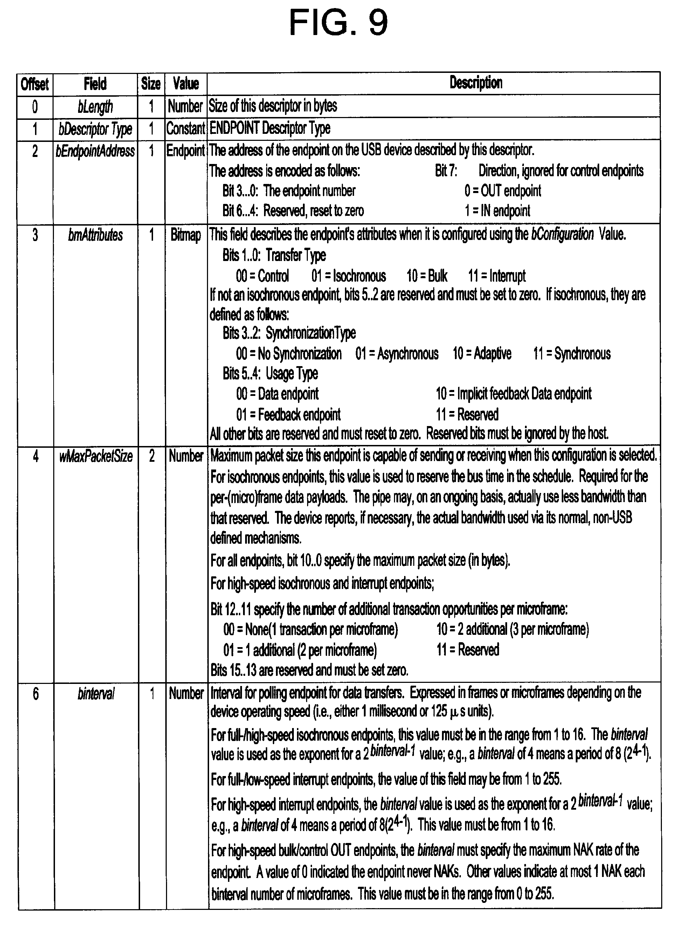

The device list storage module 330 stores the information relating to discovered wireless USB devices. This information includes a USB device address, a stream index, an endpoint address, and attributes *bmattributes* and *wMaxPacketSize.* The USB device address is the physical address of the device, for example, its MAC address. The endpoint address refers to an address of a part of the device that is arranged to receive the data transfer. The stream index is a unique number indicating the channel time allocated by the PNC in response to a request from the endpoint bandwidth allocation module 350 of the USB host. *bmattributes* is an attribute of an endpoint in a USB endpoint descriptor, as shown in Figure 9. This attribute represents the appropriate type of data transfer for that end point, that is, whether it is control transfer, isochronous transfer, interrupt transfer or bulk transfer. *wMaxPacketSize* represents the maximum size of a packet that can be transferred and received by an endpoint.

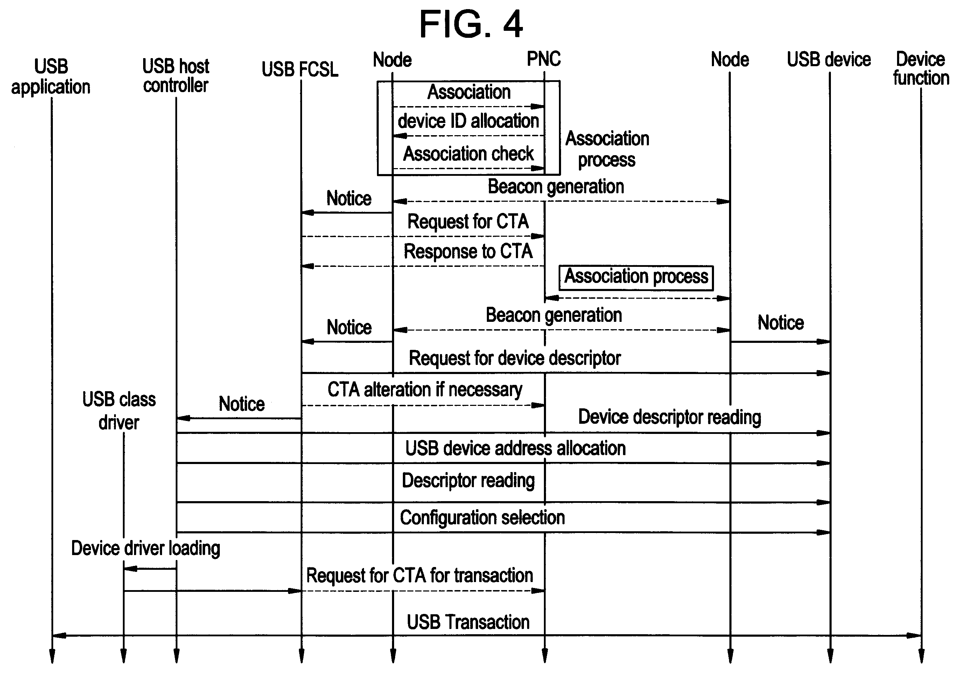

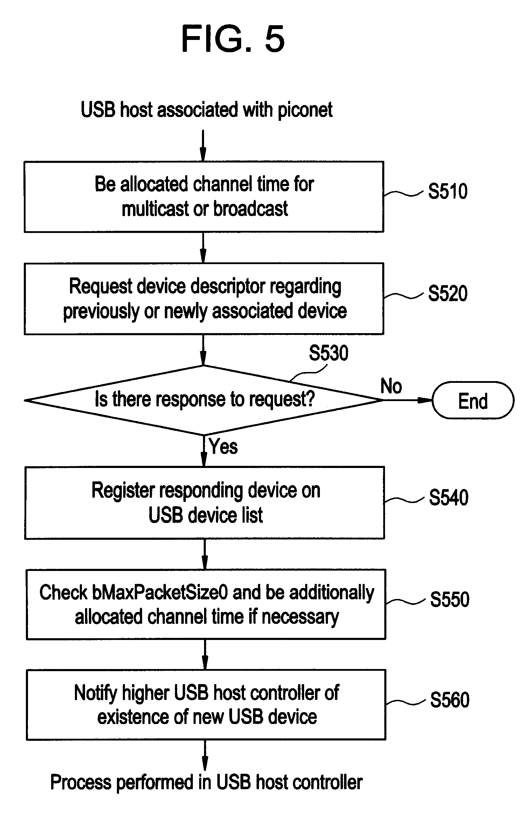

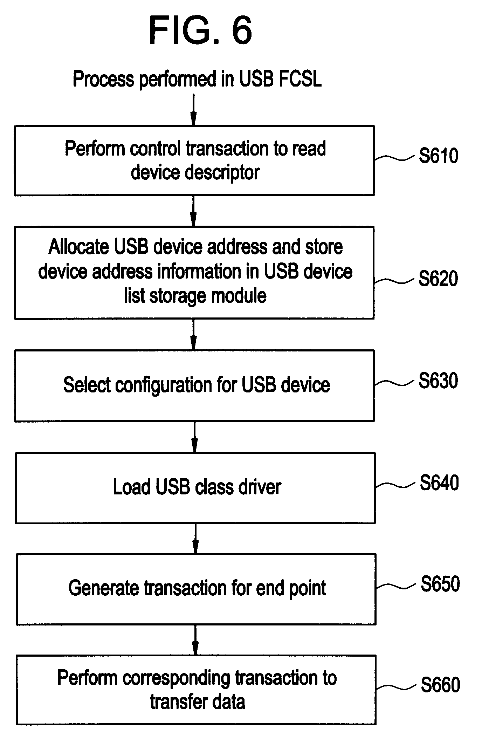

Figure 4 illustrates a procedure for wireless communication between the USE host and the USE device. The procedure is divided into a first process for discovering and registering a device that is performed in the USB FCSL 250 of the USB host and is shown in detail in Figure 5, and a second process performed in a layer higher than the USB FCSL 250 and which is illustrated in Figure 6.

When the USE host controller 240 is associated with the PNC, the USE host controller 240 is allocated channel time for multicasting or broadcasting queries for discovering USB devices at step S510. This allocation is made by the endpoint bandwidth allocation module 350. The USB host controller 240 obtains the information relating to a previously associated device or newly associated device from the PNC and requests a device descriptor from the device at step S520. If a response to the request is received by the USE host controller 240, the node corresponding to the device that has sent the response is registered in the USB device list at steps S530 and S540.

In this particular example, *wMaxPacketSize,* shown in Figure 9, is checked and, if necessary, additional channel time may be allocated at step S550. The value of *wMaxPacketSize* can be 8, 16, 32 or 64.

The USE host controller 240 is then notified of the presence of the new USB device at step S560.

The USB host controller 240 obtains the device descriptor of a newly associated device, by performing a control transfer (step S610). In this example, each transfer packet is encapsulated in a MAC packet. The control transfer is directed to a default address and a channel time allocation for multicasting or broadcasting is utilized. The MAC address of a device that is not allocated a USB device address is selected from a USB device list, stored in the USB device list storage module 330, and transferred to a higher layer through a MAC ISOCHronous DATA Service Access Point (MAC ISOCH DATA SAP).

A USE device address is then allocated to the device and stored by the USB device list storage module 330 (step S620). A configuration for the USB device is selected at step S630. If an endpoint of the device is identified by this selection, an appropriate transfer method and a required bandwidth for the endpoint are also determined. This information is also stored in the USB device list storage module 330.

A suitable USB class driver is selected and loaded. The selection is based on information regarding the class, subclass, protocol and vendor ID of the device or interface descriptor (step S640). The bandwidth required for data transfers may be allocated at this time. However, in this embodiment, the bandwidth required for the transfer is allocated on request from an application in order to efficiently utilize the available bandwidth of the PAN.

In response to such a request from the application, a class driver generates a transfer to be received by a predetermined endpoint of the device (step S650). A plurality of endpoints may exist in a single device.

Data is transferred to the USB FCSL 250 through the USE host controller 240. The USB FCSL 250 examines the address of the target device and the address of the endpoint, retrieves a MAC address and a Channel Time allocation (CTA) for the target device from the USB device list stored in the USB device list storage module 330 and transfers the data during the allocated channel time at step S660.

In this manner, a USB device may be associated with the PAN or a previously associated device may be dissociated, and the USE controller 240 notified of the event through the MLME-DEV-ASSOCIATION of the MLME SAP. In the case of an association, the discovery module 340 starts the discovery process. If a dissociation occurs, an item corresponding to the device is removed from the USB device list and the USE host controller 240 is notified of the detachment of the device.

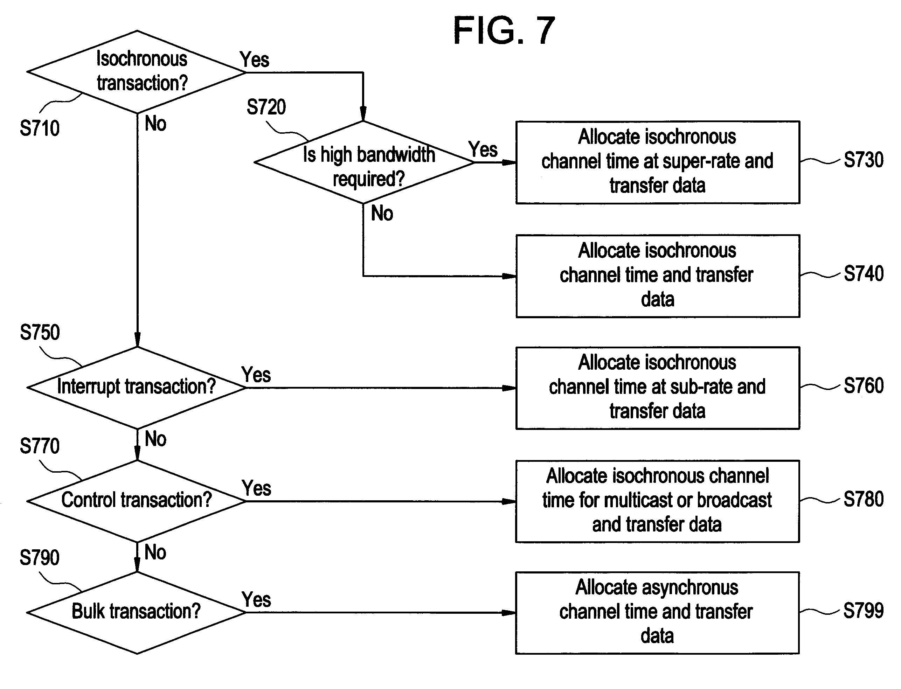

Figure 7 is a flowchart of a procedure for allocating channel time and transferring data. If the endpoint corresponding to the USB endpoint descriptor supports control, isochronous and interrupt transfers, the initial value of the endpoint descriptor is set to 'Unassigned StreamIndex.' Since channel time has not yet been allocated, the channel time is allocated through the endpoint bandwidth allocation module 350, as determined by the PNC, and data is transferred through the MAC ISOCH DATA SAP. At this time, a "No Acknowledgement" policy is employed.

If a previously allocated StreamIndex is stored in the USB device list, data is transferred in accordance the existing channel time allocation.

In the case of bulk transfer, the value of the StreamIndex is always 0. This is because bulk transfer uses an asynchronous channel time allocation. Data is transferred using MAC ASYNChronous DATA Service Access Point (MAC ASYNC DATA SAP).

Transfer methods for each of the types of data transfer discussed above are shown in Figure 7.

In the case of an isochronous transfer (step S710), the endpoint bandwidth allocation module 350 determines whether a high bandwidth is required (step S720). If the high bandwidth is required, isochronous channel time is allocated at a super-rate and data is transferred during the allocated channel time (step S730). In this example, the need for a super-rate can be determined using bits 12 and 11 of the *wMaxPacketSize,* shown in Figure 9. The allocation of channel time at the super-rate is performed by a method in which a number of channel times are allocated in a single super frame, where the number corresponds to the super-rate. Therefore, a plurality of channel times occur periodically in a single super frame.

If a high bandwidth is not required (step S720), general isochronous channel time is allocated and data is transferred during the allocated channel time (step S740). Accordingly, a single channel time is allocated in a single super frame, and a corresponding channel time for the data transfer is provided in each subsequent super frame.

In the case of interrupt transfer (step S750), isochronous channel time is allocated at a sub-rate and data is transferred accordingly (step S760). The sub-rate can be determined by a sub-rate interval indicated by an attribute *bInterval* of the endpoint descriptor, as shown in Figure 9. Allocation of channel time at a sub-rate is performed by allocating a channel time in a first super frame and repeatedly allocating corresponding channel times in subsequent super frames at intervals of two or more super frames in accordance with the sub-rate interval.

For control transfer (step S770), an isochronous channel time for multicasting or broadcasting is allocated (step S780). Data is then transferred during a corresponding channel time.

For bulk transfer (step S790), an asynchronous channel time for multicasting or broadcasting is allocated (step S799) and data transferred accordingly. The allocation of asynchronous channel time is performed by a channel allocation method with no periodic characteristics, and is distinguished from the channel allocation methods for other types of data transfer in this respect. If there is no available channel time in a Contention Free Period (CFP), which is a portion of a super frame to which a channel time is allocated, data transfer is delayed until the next frame. In contrast, if there is an available channel time, the data are transferred using the channel time in the present frame.

The present invention enables software and USB devices, which are widely used in existing wired communication networks, to be used in wireless PAN networks. Therefore, the inconvenience of wired communication can potentially be removed and an environment provided in which wireless PAN application software can be more easily developed.

Additionally, the present invention is compatible with existing wireless PAN application software for non-USB devices.

It is appreciated that the above-described methods may be implemented by a program being executed by a computer acting as the USB host. It is also appreciated that a signal for programming a computer to perform the above-described method may be read from a data carrier or downloaded from a network.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A method of transferring data between a host device and a peripheral device using a serial communication protocol, **characterised by** carrying serial communication protocol signals (S660, S730, S740, S760, S780, S799) between the host and the peripheral device via a wireless network.

2. A method according to claim 1, wherein said serial communication protocol is a Universal Serial Bus protocol.

3. A method according to claim 1 or 2, wherein said wireless network is a piconet.

4. A method according to claim 1, 2 or 3, comprising:
detecting presence of the peripheral device on the wireless network;
ascertaining a type of data transfer associated with an endpoint of the peripheral device (S710, S750, S770, S790); and
allocating a channel time to the device according to a type of data transfer to be performed by said device (S730, S740, S760, S780, S799).

5. A computer programmed to perform a method according to any preceding claim.

6. A signal representing a computer program for programming a computer to provide a computer according to claim 5.

7. A data carrier having a signal according to claim 6 recorded therein or thereon.

8. A host device arranged to control transfer of data to and from a peripheral device using a serial communication protocol, **characterised in that** the host device is configured to transfer and receive serial communication protocol signals to the peripheral device via a wireless network.

9. A host device according to claim 8, in which a protocol stack is implemented, the protocol stack comprising a first layer (270) for handling communication via the wireless network and a second communication layer (250) for controlling functions according to the serial communication protocol, wherein the second layer is above the first layer in said protocol stack.

10. A host device according to claim 9, comprising:
encapsulating means (320) for encapsulating data packets according to the serial communication protocol into data packets according to a second protocol that can be transferred over the wireless network; and
decapsulating means (310) for decapsulating data packets according to a second protocol that are received from the wireless network to retrieve data packets according to the serial communication protocol;
wherein said protocol stack further comprises an access control layer (260) for controlling access to the wireless network, the access control layer being disposed between said first and second layers (270, 250).

11. A host device according to claim 8, 9 or 10, configured to perform a procedure for:
detecting an association or a disassociation of a peripheral device;
storing information relating to associated peripheral devices; and
updating said stored information in response to a detected association or disassociation.

12. A host device according to any one of claims 8 to 11, comprising:
allocation means (350) configured to allocate a channel time to the peripheral device according to a type of data transfer to be performed by said peripheral device.

13. A host device according to any one of claims any one of claims 8 to 12, wherein said serial communication protocol is a Universal Serial Bus protocol.

14. A wireless network system comprising:
a host device according to any one of claims 8 to 13;
a peripheral device for communicating with the host device via a wireless network using a serial communication protocol; and
a wireless network.

15. A wireless network system according to claim 14, wherein said wireless network is a piconet.

16. A wireless network system according to claim 14 or 15, comprising:
coordinating means arranged to determine a channel time to be allocated to the peripheral device according to a type of data transfer to be performed by said peripheral device,
wherein said host device is arranged to request from the coordinating means a determination of a channel time to be allocated to the peripheral device.

17. A network packet comprising an encapsulated data packet, wherein said data packet is configured according to a serial communication protocol.

18. A network packet according to claim 17, wherein said serial communication protocol is a Universal Serial Bus protocol.

19. An apparatus for transferring transactions of a Universal Serial Bus (USB) over a wireless Personal Area Network (PAN), comprising:
a USB device discovery module configured to discover a USB device from devices on the wireless PAN;
a USB device list storage module configured to store information of the discovered USB device; and
an endpoint bandwidth allocation module configured to allocate an appropriate channel time according to a type of a transaction determined from the information of the discovered device.

20. The apparatus as set forth in claim 19, further comprising:
an encapsulation module configured to encapsulate a USE packet into a Media Access Control (MAC) packet to transfer data to the discovered USB device; and
a decapsulation module configured to decapsulate a MAC packet received from the discovered USB device into a USB packet.

21. A wireless piconet system, further comprising:
a PicoNet Coordinator (PNC) receiving a request for a channel time allocation from a Universal Serial Bus (USB) host and to allocate an appropriate channel time; and
a USE host configured to discover a USE device from devices on a wireless Personal Area Network (PAN) and to be allocated the appropriate channel time according to a type of a transaction, which can be found from an information of the discovered device, from the PAN; wherein the USB device transfers/receives data to/from the USB host according to the type of the transaction during the allocated appropriate channel time.

22. A method of transferring transactions of a Universal Serial Bus (USB) over a wireless Personal Area Network (PAN), comprising the steps of:
reading a device descriptor of an associated USB device;
ascertaining a type of a transaction of an endpoint using the device descriptor; and
determining a channel time according to results of the ascertaining and transferring data during the channel time.

23. The method as set forth in claim 22, further comprising the step of discovering the associated USB device before the step of reading the device descriptor.

24. The method as set forth in claim 23, wherein the step of discovering the associated USB device comprises:
allocating the channel time for multicast or broadcast from a PicoNet Coordinator (PNC);
requesting the device descriptor from a previously associated or a newly associated USB device;
registering the one of the previously associated or the newly associated USB device responding to the request on a USB device list; and
notifying a higher USB host controller of an existence of the newly associated USB device.

25. The method as set forth in claim 22, further comprising the step of examining a maximum size of a packet for an endpoint using the device descriptor and allocating an additional channel time if necessary.

26. The method as set forth in claim 22, further comprising the following steps between the steps of reading the device descriptor and ascertaining a type of a transaction:
loading a corresponding associated USB class driver using information of the device descriptor;
allocating an address of the USB device and storing information of the allocated address in a USB device list storage module; and
selecting a configuration for the associated USB device.

27. The method as set forth in claim 26, further comprising the step of generating by a class driver a transaction for a corresponding endpoint in response to a request of an application after the step of the loading the USB class driver.

28. The method as set forth in claim 22, further comprising, if the endpoint supports an isochronous transaction: allocating an isochronous channel time at a super-rate and transferring the data during a corresponding channel time if a high bandwidth is required; and allocating a general isochronous channel time and transferring the data during a corresponding channel time if the high bandwidth is not required.

29. The method as set forth in claim 22, wherein, if the endpoint supports an interrupt transaction, an isochronous channel time is allocated at a sub-rate and data are transferred during a corresponding channel time.

30. The method as set forth in claim 22, wherein, if the endpoint supports a control transaction, an isochronous channel time for multicast or broadcast is allocated and data are transferred during a corresponding channel time.

31. The method as set forth in claim 22, wherein, if the endpoint supports a bulk transaction, an asynchronous channel time is allocated and data are transferred during a corresponding channel time.

32. A computer-readable recording medium for recording a computer program code for enabling a computer to provide a service of transferring transactions of a Universal Serial Bus (USE) over a wireless Personal Area Network (PAN), the service comprising the steps of:
reading a device descriptor of an associated USB device;
ascertaining a type of a transaction of an endpoint using the device descriptor; and
determining a channel time according to results of the ascertaining and transferring data during the channel time.
